# EUROPEAN PATENT APPLICATION

(11) **EP 1 093 052 A2**
(43) Date of publication of application: **18.04.2001**
(21) Application number: 00122450.0
(22) Date of filing: 13.10.2000
(51) Int. Cl.: G06F 3/12

(54) **Printer, method of controlling it, host computer for cooperation with the printer and method of controlling the host computer**

(30) Priority: 15.10.1999 JP 29440299; 28.08.2000 JP 2000257889
(71) Applicant: SEIKO EPSON CORPORATION, Shinjuku-ku, Tokyo 163-0811 (JP)
(72) Inventor: Takamizawa, Yuji, Seiko Epson Corporation, Suwa-shi, Nagano-ken 392-0811 (JP); Yamaji, Atsushi, Seiko Epson Corporation, Suwa-shi, Nagano-ken 392-0811 (JP)
(74) Representative: Hoffmann, Eckart, Dipl.-Ing.

(57) **Abstract**

When the printer is off-line and receives a large volume of data, a receive buffer (17) is not filled and the communication interface with the host computer (10) does not enter a busy state. The receive buffer (17) temporarily stores data, including control commands, from the host computer (10), and the printer operates according to the sequentially interpreted content of data stored in the receive buffer (17). By detecting whether the printer is on-line or off-line, data in the receive buffer (17) is cleared when the printer goes off-line and data received from the host while the printer is off-line is discarded without being buffered.

## Description

The present invention relates to a printer that operates in response to data it receives from a host computer, and to a control method for such printer. The invention also relates to the host computer adapted to cooperate with the printer and to a control method for the host computer.

EP-A-0 945 824 discloses a printer according to the prior art portion of claim 1, which is adapted to be connected to a host computer to receive data, including control commands, from the host, and which operates to print as instructed by the received control commands. Received data is temporarily stored in a first-in, first-out (FIFO) receive buffer, sequentially retrieved therefrom and interpreted by a data interpreter implemented by a program controlled CPU. The printer then performs a printing process according to interpreted control commands.

The known printer is designed to process two different types of control commands: normal commands and real-time commands. Real-time commands are control commands that are executed immediately upon receipt by the printer without being stored in the receive buffer while normal control commands are stored in the receive buffer. When a real-time command is received, the printer inserts it at the front end of the command queue for immediate execution before other stored commands. Real-time commands include, for example, a command to return information about the printer status to the host, and commands for recovering the printer from recoverable errors. These commands can be performed by the printer even when an error has occurred and the printer is off-line. As explained in detail in EP-A-0 945 824, printers of this type are normally either off-line or on-line. When on-line, the printer stores data received from the host computer in the receive buffer and sequentially interprets the received and stored data by the CPU.

EP-A-0 945 824 is concerned with a resumption operation, i.e., the operation to be performed by the printer upon returning from the off-line state to the on-line state. The kind of resumption operation to be performed can be set by means of a corresponding control command sent by the host. One of the possible resumption operations involves clearing the receive buffer.

When off-line, the printer does not interpret data in the receive buffer. Conventionally, when the printer is off-line data can still be received from the host computer and sequentially stored in the receive buffer. In the off-line state, the CPU, however, interprets only real-time commands and typically does not interpret data in the receive buffer. This means that the receive buffer can become full (meaning that there is either very little or no space left to store more data) when a large volume of data, such as bit map image data, is received from the host when the printer is off-line. The communication interface of the printer then enters a busy state, indicating that no more data can be received from the host, and thus prevents any additional data, including real-time commands, from being sent from the host to the printer. The host is then unable to detect the printer status or recover the printer from recoverable errors.

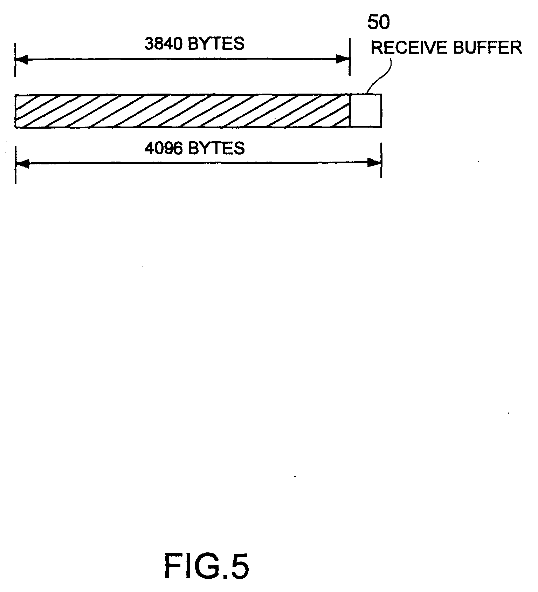

Referring to Fig. 5, for example, the receive buffer 50 of a printer has, of course, a finite capacity, which in this example is shown to be 4096 bytes. The printer indicates a busy state to the host computer whenever a certain amount of data is stored in the receive buffer 50. In this example a busy state is indicated when the receive buffer is filled to at least 95% of its capacity (i.e., when 3840 bytes have been stored in this example). If the printer has a print head that prints 640 dots per horizontal line (80 bytes per line), the receive buffer will become full when data sufficient to print 48 dot lines (about 6 mm vertically across the page) has been received (3840/80 = 48 dot lines).

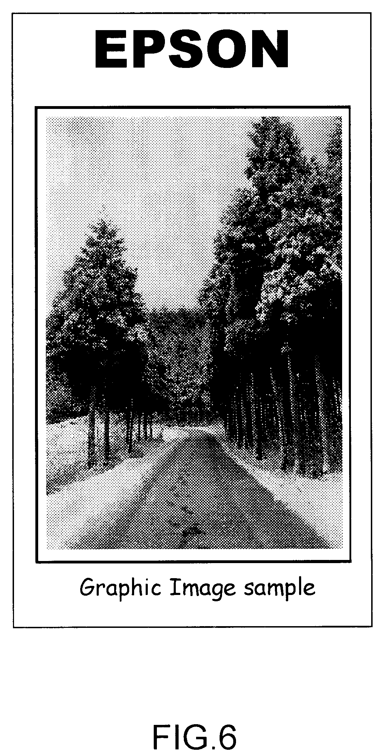

This means that if bit map print data representing an image such as that shown in Fig. 6 and equivalent to about one typical receipt, is received while the printer is off-line, the receive buffer will be filled almost immediately.

If the host computer sends data to the printer via a print spooler and the printer keeps sending a busy signal, the print spooler will eventually generate an error. However, the application that has sent the data to the spooler cannot delete data from the spooler, and the user must therefore directly delete the unprinted data from the spooler.

An object of the present invention is to overcome these problems of conventional printers and to provide a printer and a method of controlling it in which the receive buffer does not become full even when a large volume of data is received while the printer is off-line, and which, therefore, prevents the communication interface with the host computer from entering a busy state.

A further object of the invention is to provide a printer and its control method that allow selection between a mode for storing and a mode for discarding received data when the printer is off-line.

A yet further object of the invention is to provide a printer and its control method that allow real-time commands to be interpreted and a process according to the content of the real-time command to be performed when the printer is in a mode for avoiding a busy state.

A yet further object of the invention is to provide a printer that can delete received data rather than requiring the application program on the host computer to delete transferred data, and thus does not increase the load on the application program.

A yet further object of our invention is to assure that print data sent by the host computer can be reliably printed even if the printer is set to the mode for discarding received data.

These objects are achieved with a printer as claimed in claim 1, a method as claimed in claim 8, a host computer as claimed in claim 19 and a method as claimed in claim 20, respectively. Preferred embodiments of the invention are subject-matter of the dependent claims.

According to the invention the receive buffer is prevented from becoming full and the communication interface with the host computer is prevented from entering a busy state even when a large volume of data is received while the printer is off-line. The host computer can therefore continue to send real-time control commands to the printer, and can therefore determine the printer status or recover the printer from a recoverable error state. In addition, because data is discarded by the printer and thus prevents the communication interface from returning a busy signal due to a full receive buffer, the print spooler is prevented from generating an error in systems in which the host computer sends print data to the printer via a print spooler.

It is possible to selectively set a printer according to the invention to either save or discard received data when the printer is off-line, and the printer can thus be set to the mode appropriate to the current operating conditions.

Furthermore, real-time commands can still be executed when the printer is off-line, thereby enabling the printer status to be determined and recoverable printer errors to be corrected using such real-time commands.

Yet further, the host computer can resend print data when data in the receive buffer has been cleared in accordance with the control method of the invention, and print data can therefore be reliably printed.

While the off-line data handling mode is preferably set by a corresponding control command from the host computer, other methods for setting this mode are conceivable. For instance, DIP switches on the printer itself could be employed for this purpose, or the data for setting the handling mode could be written into a fuse ROM or flash memory.

Because the printer can receive real-time commands from the host computer, the cash drawer of a POS station can be opened even when the printer is off-line, for example. In addition, when the user rectifies an error due, for example, to a paper jam or paper cutter jam, causing the printer to go off-line, a real-time command for recovering from the error can be received from the host computer, and the printer can be brought back to the on-line state. Furthermore, the printer can respond to various real-time status request commands sent by the host, and can thus return the printer status causing the error or off-line state and keep the host informed of the current printer status even while the printer is off-line.

Further objects and advantages of the invention will be understood from the following description of preferred embodiments in conjunction with the accompanying drawings, in which:
- Fig. 1: is a schematic block diagram showing the general connections between a host computer and a printer according to an embodiment of the invention;
- Fig. 2: is a flow chart of an embodiment of a control process when the printer is off-line;
- Fig. 3: is a flow chart an embodiment of a control process executed in the host computer for sending print data to the printer;
- Fig. 4: is a flow chart of printer operation when print data is sent from the host computer in accordance with the control process shown in Fig. 3;
- Fig. 5: is a schematic diagram of the receive buffer describing a receive buffer full state; and
- Fig. 6: is an typical example of a bit map image sent to a printer for printing receipts.

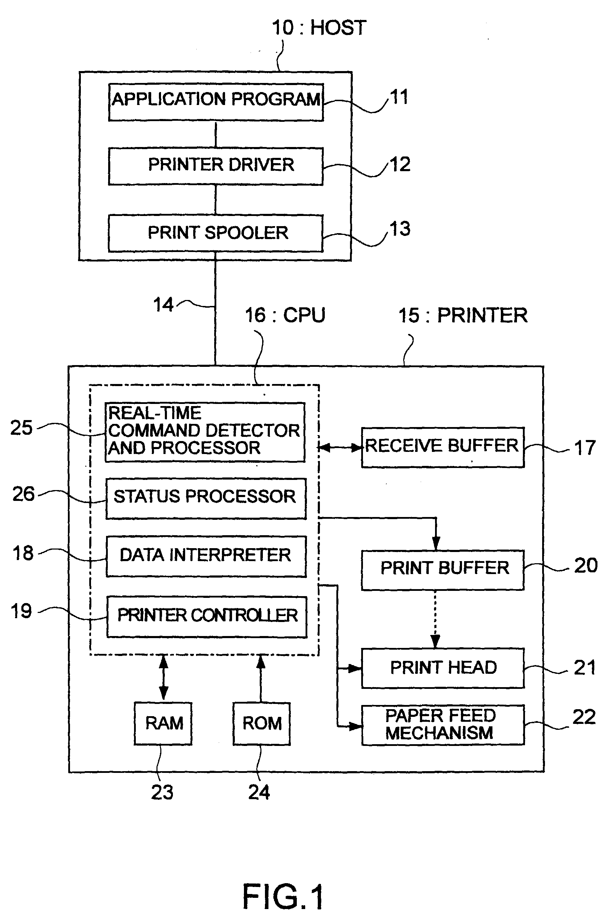

As shown in Fig. 1, printer 15 is connected to a host computer 10 (referred to simply as "host" below) by way of a Centronics® or other interface cable 14. Printer 15 receives control commands and other data from host 10, and operates accordingly. Host 10 typically begins sending data to the printer when the user selects a print command within an application program 11 running on host 10. Print commands from application program 11 are passed through printer driver 12 to print spooler 13. Print spooler 13 temporarily stores plural print requests in local memory, and sequentially sends them to printer 15.

Except for real-time commands, which are further described below, printer 15 temporarily stores the sequentially sent and received data in receive buffer 17, which is a FIFO buffer. Data stored in receive buffer 17 is read in sequence from the first stored data, and any control commands are interpreted by data interpreter 18, which is implemented by CPU 16 executing a particular program routine. Printer controller 19 controls driving the mechanical parts of the printer according to the interpreted control commands, and thus accomplishes printing and other mechanical operations. If the data interpreted by data interpreter 18 is a print command, CPU 16 expands the print data from receive buffer 17 in print buffer 20, and drives print head 21 and paper feed mechanism 22 appropriately to print and output the print data in print buffer 20.

The operation of printer 15 according to the invention can be set by a control command from host 10. That is, printer 15 has an area in RAM 23 reserved for storing corresponding operation settings, and the specific values stored in this memory area can be changed as needed. These operation settings are read from RAM 23 as required and interpreted by CPU 16, which then performs the corresponding process.

These operation settings can alternatively be stored in an EEPROM (electrically erasable programmable ROM), flash memory or other nonvolatile memory device (not shown in the figures) so that the stored settings are not erased when printer 1 5 is turned off. It is also possible to provide DIP switches or the like to allow these settings to be made manually.

One of the settings stored in RAM 23 controls the off-line data handling mode (OFDH mode), i.e., how data received when the printer is off-line are handled. This setting determines whether data already stored in receive buffer 17, data received while the printer is off-line, and data in print buffer 20 is held in memory or is discarded when printer 15 is off-line. This setting is by default so as to hold the data, but by sending an appropriate command the host 10 can change the setting so that data is discarded.

Printer 15 has a real-time command detector and processor 25 implemented by CPU 16 in conjunction with a program routine realizing the control method of the invention. Real-time command detector and processor 25 detects whether received data is a real-time command before storing the received data in receive buffer 17. If a real time command is detected, the process indicated by the real-time command is immediately carried out before any other process is continued or started. As further described below, real-time commands are interpreted and executed even when the OFDH mode is set to discard data. It should be noted that font data, various settings data other than the operation settings mentioned above, and a control program run by CPU 16 are stored in ROM 24. It will be obvious that ROM 24 can be plural physically discrete memory elements. Various kinds of rewritable nonvolatile memory such as an EEPROM device may be used as ROM 24.

Printer 15 further has a status processor 26, also implemented by CPU 16. This status processor 26 provides an automatic status back (ASB) function for automatically informing host 10 about the printer status independently of any request from host 10. To enable this ASB function, the host 10 first defines the piece or pieces of status information that the ASB function is to monitor and report. When there is a change in this or any of these pieces of status information, the printer 15 automatically notifies the host 10. By thus automatically receiving specific printer status data, host 10 can send print data and control printer 15 based on the ASB data without needing to request status information from the printer 15. Host 10 relies on ASB reports from the printer 15 and real-time commands to monitor whether printer 15 is on-line or off-line.

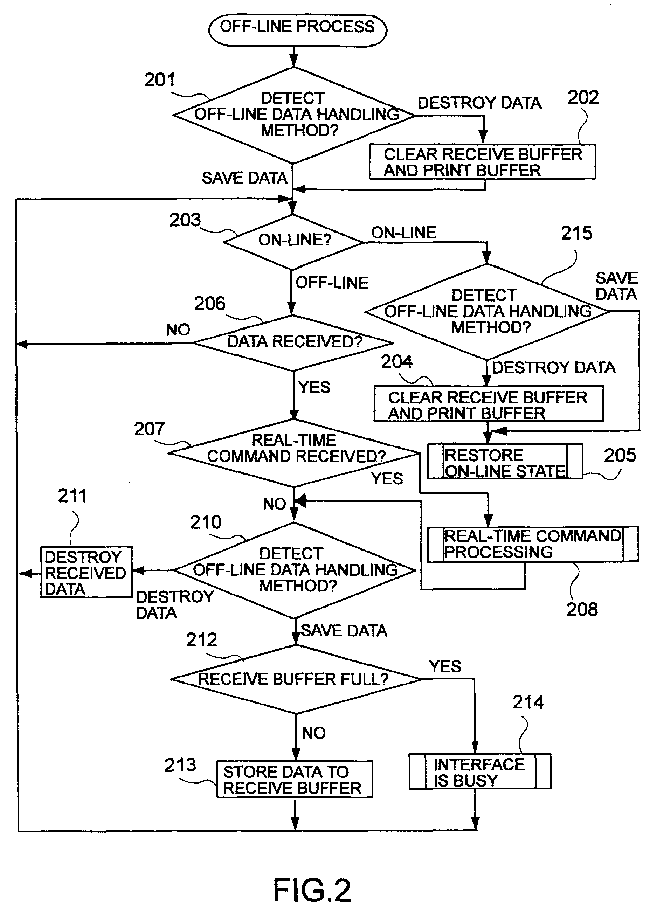

Fig. 2 is a flow chart of a control process according to the invention. The control process shown in Fig. 2 is performed when printer 15 goes off-line. Factors which could cause printer 15 to go off-line include, for example, the user opening a cover of the printer, there being no paper loaded, or a specific error occurring in printer control.

CPU 16 detects when printer 15 goes off-line, and then starts the control process in Fig. 2. The first step 201 is to read and interpret the printer settings stored previously in RAM 23.

If the OFDH mode is set to discard data, all data in receive buffer 17 and print buffer 20 are cleared (step 202). One method for accomplishing this is to reinitialize the pointers used to specify the addresses in receive buffer 17 and print buffer 20. If the OFDH mode is set to hold data, control advances to step 203 without clearing receive buffer 17 and print buffer 20.

Step 203 detects whether printer 15 is still off-line. If printer 15 has gone on-line again after this off-line control process started (because the user has switched printer 15 to the on-line state, for example), control advances to step 215. Step 215 reads again the OFDH mode setting. If set to discard data, receive buffer 17 and print buffer 20 are cleared (step 204) and the printer is then set to the on-line state (step 205). If set to hold data, the printer is set to the on-line state (step 205) without clearing receive buffer 17 and print buffer 20.

As further described below, if the OFDH mode is set to discard data, data is not stored in the buffers while the printer is off-line, and it is not always necessary to clear the buffers when the printer returns to the on-line state. If the OFDH mode is set to hold data, however, clearing the buffers prevents errors resulting from data left in the buffer when the printer goes on-line.

It should be noted that printer 15 can receive data from host 10 while being off-line.

If step 203 reveals that printer 15 is still off-line, the printer waits for data from host 10 (step 206), and if data is received from host 10 while the printer is off-line, control advances to step 207. The real-time command detector and processor 25 then detects whether a real-time command is contained in the received data. If a real-time command is not present, control advances to step 210.

If a real-time command is present, control advances to step 208 where the command is interpreted and executed. Then control advances to step 210.

The OFDH mode setting is again read at step 210 to determine whether it is set to hold data or discard data. If set to discard data, the data is discarded without being saved in receive buffer 17 (step 211), and the procedure loops back to step 203 to repeat the process for any data received next. The loop from steps 203 to 210 is repeated for as long as printer 15 remains off-line. As a result, receive buffer 17 is prevented from becoming full while the printer is off-line, and the communication interface will not enter a busy state. Yet, real-time commands are recognized and executed.

If step 210 reveals that the OFDH mode is set to hold data, control advances to step 212. Step 212 detects whether the receive buffer 17 is full. If it is not full, the received data is stored sequentially in receive buffer 17 (step 213). If the receive buffer 17 is full in step 212, the host 10 is notified that the interface is busy (step 214).

Control of host 10 is described next. When the OFDH mode is set to discard data in the process illustrated in Fig. 2, all print data sent from the host 10 while the printer 15 is off-line is discarded and will not be printed. Control of the host 10 in this embodiment of the invention addresses this problem by resending print data sent while the printer was off-line after the printer returns to the on-line state.

To detect whether all print data sent to printer 15 was printed, host 10 uses a control command requesting notification that printing has been completed (referred to below as the printing completed command). This printing completed command is returned by printer 15 when the corresponding print data has been completely printed, and is sent in response to a request for such notification from host 10. In this exemplary embodiment of the invention the print data to which this command applies is the print data sent immediately before this printing completed command.

In a practical implementation of the invention this printing completed command can be achieved using a command having the same effect, that is, a command that is returned when printing is completed. For example, the printer control command ESC r1 can be used as this printing completed command. This ESC r1 command is returned to host 10 as a 1-byte status command identifying the status of paper in printer 15. If printer 15 is in the middle of printing, this ESC r1 command is returned to host 10 to confirm the paper status after printing is completed.

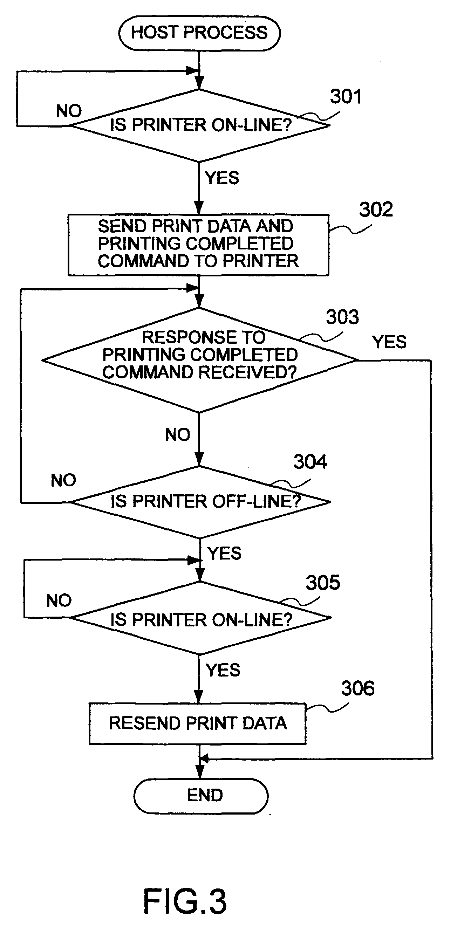

Fig. 3 is a flow chart of the control process in host 10 when print data is sent to printer 15.

When printer 15 is confirmed to be on-line (step 301), host 10 sends print data with the printing completed command appended to the end thereof (step 302). Host 10 then waits for confirmation from the printer 15 that printing is completed (i.e., waits for a response corresponding to the above-noted printing completed command) (step 303). Host 10 continues to wait for this response as long as printer 15 does not go off-line (step 304). When the printer 15 completes printing and sends a response comparable to the printing completed command to host 10 ("YES" in step 303), host 10 determines that the transmitted print data was successfully printed and ends this process.

If printer 15 goes off-line due to some error or other problem before the printing completed command is returned, the printer reports to the host that it has gone off-line (step 304). When the host 10 receives this off-line report, control moves to step 305 to wait for printer 15 to return to the on-line state. When the printer problem is solved and printer 15 returns to the on-line state, host 10 receives an on-line report from the printer (step 305), and resends previously sent print data and the printing completed command (step 306). Note that these off-line and on-line status reports from printer 15 are accomplished by the ASB function of printer 15.

If the OFDH mode in printer 15 is set to discard data, any data in receive buffer 17 and print buffer 20 is discarded when the printer 15 goes off-line. By sending print data to printer 15 according the control process shown in Fig. 3, print data sent by host 10 can be reliably printed irrespective of the OFDH mode setting.

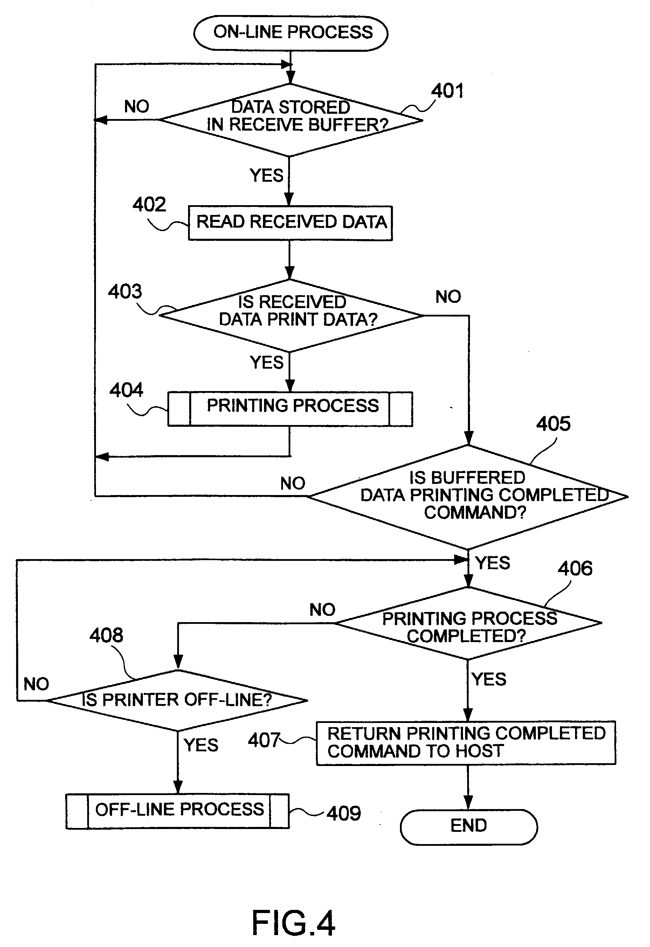

Fig. 4 is a flow chart of the control process in printer 15 when the printer is on-line and print data is sent from host 10 according to the process shown in Fig. 3. Printer 15 confirms whether data is stored in receive buffer 17 (step 401). If there is, the data is read in blocks of a specific size and passed to data interpreter 18 (402). The data interpreter 18 detects whether the read data is print data (step 403), and, if it is, CPU 16 runs the printing process (step 404). Step 404 is repeated until all print data have been printed.

When all print data read in step 402 has been processed, the printing completed command appended to the print data will be read next, and step 403 will pass control to step 405. When the read data is the printing completed command, step 405 waits for the printing process to be completed (step 406) and then sends a response corresponding to the printing completed command to host 10 (step 407). When the host 10 receives this response, it knows that all sent print data have been successfully printed as described above. If printer 1 5 goes off-line due to an error or other reason before printing is completed (step 408), the off-line control process (step 409) shown in Fig. 2 is run.

Although the present invention has been described in connection with preferred embodiments thereof, it is to be noted that various changes and modifications will be apparent to those skilled in the art. For example, the invention is not limited to the data transmission procedure of the host 10 described above, and includes procedures for sending data according to other known methods. Furthermore, an exemplary embodiment has been described as discarding all data other than real-time commands (which are first executed and then deleted) sent from host 10 when printer 15 is off-line and has its OFDH mode set to discard data. However, it is alternatively possible to clear receive buffer 17 and print buffer 20 when the printer goes off-line and then store data received while the printer is off-line. In this case the mode setting command has a 2-bit command parameter, one bit used to set the OFDH mode when the printer enters the off-line state, and the other bit used to set the OFDH mode while the printer is off-line.

Furthermore, because a busy signal is sent to host 10 when receive buffer 17 becomes full, it is also possible to clear only receive buffer 17 and not clear print buffer 20 when the printer goes off-line.

Still further, while the present invention has been described as controlling a printer depending on whether it is in the on-line state or the off-line state, the same principle may be applied to other states. The "off-line state" has been defined as a state in which the printer does not interpret received data in the receive buffer. For printers that do not print, but do interpret data when the printer is off-line the above definition of the term "off-line" would not be correct. For such types of printer, for instance, the "off-line state" in the preceding description may be replaced by "first state" defined as a state in which the printer does not print received data, while the "on-line state" may be replaced by "second state" defined as a state in which the printer prints received data.

## Claims

1. A printer adapted to be connected to a host computer (10) and to receive data including control commands from the host computer (10), comprising:
a receive buffer (17) for temporarily storing received data;
a data interpreter (18) for interpreting the data in the receive buffer (17);
control means (16, 19) responsive to said data interpreter (18) for controlling the printer;
state detection means (16) for detecting whether the printer is in a first state in which received data is not printed, or a second state in which received data is printed; and
clearing means (19) for clearing the receive buffer (17),
**characterized in that** the clearing means (19) is responsive to said state detection means (16) for clearing the receive buffer (17) when the printer is detected to be in the first state.

2. A printer of claim 1, further comprising:
setting means (16) for setting a data handling mode that determines how data are handled when the printer is in said first state; and
reading means (16) for reading this data handling mode when the printer is detected to be in said first state by said state detection means (16);
wherein the clearing means (19) is adapted to clear the receive buffer (17) only when the data handling mode is set to allow clearing the receive buffer (17).

3. A printer of claim 2, wherein said setting means (16) is adapted to set the data handling mode in response to a specific control command from the host computer (10).

4. A printer of any one of claims 1 to 3, further comprising data discarding means (16) for discarding data received from the host computer (10) while the printer is in said first state.

5. A printer of claim 4, wherein the data discarding means (16) is adapted to discard data only when the data handling mode is set to allow discarding the data received from the host computer (10).

6. A printer of any one of claims 1 to 5, further comprising a print buffer (20) for storing expanded print data, wherein the clearing means (19) is adapted to clear both the receive buffer (17) and the print buffer (20).

7. A printer of any one of the preceding claims wherein said first state is an off-line state in which said data interpreter (18) does not interpret received data, and said second state is an on-line state in which said data interpreter (18) interprets the data.

8. A method of controlling a printer as defined in claim 1, comprising:
(a) detecting whether the printer is in the first state or the second state; and
(b) clearing the receive buffer (17) when the printer is detected to be in the first state.

9. The method of claim 8, wherein step (b) is accomplished immediately after the first state is detected in step (a).

10. The method of claim 9 or 10, further comprising the steps of
(c) setting the data handling mode so as to either allow or not allow clearing the receive buffer (17); and
(d) reading the data handling mode when the first state is detected in step (a);
wherein step (b) comprises clearing the receive buffer (17) only when the data handling mode read in step (d) allows clearing the receive buffer (17).

11. The method of claim 10, wherein step (c) is accomplished according to a specific control command from the host computer (10).

12. The method of any one of claims 8 to 11, further comprising a step of
(e) discarding data received from the host computer (10) after the receive buffer (17) was cleared in step (b) and until step (a) detects the second state.

13. The method of claim 12 and either claim 10 or claim 11, wherein step (e) comprises discarding data only when the data handling mode read in step (d) allows discarding the data received from the host computer (10).

14. The method of any one of claims 8 to 11, further comprising a step of
(f) saving in the receive buffer (17) data received from the host computer (10) after the receive buffer (17) was cleared in step (b) and until step (a) detects the second state.

15. The method of any of claims 8 to 14, further comprising a step of
(g) clearing the receive buffer (17) when the second state is detected in step (a) after the first state had been detected before.

16. The method of any one of claims 8 to 14 for controlling the printer defined in claim 7, wherein step (b) comprises clearing the receive buffer (17) and the print buffer (20).

17. The method of claims 15 and 16 wherein step (g) comprises clearing the receive buffer (17) and the print buffer (20).

18. The method of any one of claims 8 to 17 wherein said first state is the off-line state and said second state is the on-line state.

19. A host computer for sending data including control commands to a printer according to any of claims 1 to 7, comprising:
data transmission means for sending print data accompanied by a printing completed command requesting the printer to notify the host computer (10) when printing is completed;
notification detection means for awaiting and detecting a printing completed notification received from the printer in response to the printing completed command;
state detection means (16) for awaiting and detecting an on-line state or off-line state notification from the printer; and
print data resending means for resending print data to the printer after receiving an on-line notification from the printer when the state detection means (16) detected an off-line notification from the printer while awaiting the printing completed notification.

20. A method of controlling a host computer for sending data including control commands to a printer controlled in accordance with the method as defined in any one of claims 8 to 18, comprising the step of:
sending print data to the printer in conjunction with a printing completed command requesting notification when printing of the print data is completed;
awaiting a printed completed notification from the printer in response to said printing completed command; and
resending the print data to the printer after receiving an on-line notification from the printer when an off-line notification had been received from the printer while the printing completed notification was awaited.
